# EUROPÄISCHE PATENTANMELDUNG

(11) **EP 0 688 084 A2**
(43) Veröffentlichungstag der Anmeldung: **20.12.1995**
(21) Anmeldenummer: 95108999.4
(22) Anmeldetag: 12.06.1995
(51) Int. Cl.: H02J 7/14

(54) **Ladestromsystem für ein Fahrzeug**

(30) Priorität: 17.06.1994 US 261521
(71) Anmelder: DEERE & COMPANY, Moline, Illinois 61265 (US)
(72) Erfinder: Eavenson, Jimmy Nelson Sr., Juneau, Wisconsin 53039 (US); Hough, Barry Michael, Beaver Dam, Wisconsin 53916 (US)
(74) Vertreter: Feldmann, Bernhard

(57) **Zusammenfassung**

Zur Erhöhung der Generatorleistung wird einem herkömmlichen Ladestromsystem in einem Fahrzeug ein Zusatzgenerator (52) zugeschaltet, der zu dem Generator (12) im herkömmlichen Ladestromsystem parallel arbeitet. Der Zusatzgenerator (72) ist mit einer eigenen Verdrahtung (60) versehen, die mit der Verdrahtung des herkömmlichen Ladestromsystems verbunden wird.

## Beschreibung

Die Erfindung bezieht sich auf ein Ladestromsystem für ein Fahrzeug, insbesondere Nutzfahrzeug, mit einer Batterie, einem Verbrennungsmotor, einem Generator, einem Regler für den Generator und mit einer Verdrahtung, die den Generator mit der Batterie und mit dem Regler verbindet.

Fahrzeuge, wie Nutzfahrzeuge oder Arbeitsfahrzeuge, beispielsweise Traktoren, weisen ein Ladestromsystem auf, das zum Laden der Batterie und für die Stromerzeugung während des Betriebes vorgesehen ist. Solche Ladestromsysteme werden durch die Generatorleistung geprägt, und in der Regel wird ein Generator gewählt, der 10 bis 20% mehr leistet, als es bei voller Belastung nötig ist. Dabei gibt es Systeme, die über längere Zeiträume hohe Generatorleistungen bei niedrigen Drehzahlen oder bei leerlaufenden Motor benötigen. Ist das Ladestromsystem für solche Leistungen nicht ausgelegt, so erfolgt eine zusätzliche Stromversorgung über die Batterie mit der Folge, daß sich die Batterie schnell entlädt und die Stromversorgung zusammenbrechen kann. Hohe Generatorleistungen können auch erforderlich werden, wenn zusätzliche Verbraucher installiert werden, die vom Hersteller nicht vorgesehen waren, oder geschlossene Generatoren bei viel Feuchtigkeit und Schmutz eingesetzt werden müssen. Andererseits können hohe Temperaturen um den Generator zu großer Wärmeentwicklung im Generator führen und dadurch zu einem Leistungsabfall. Hinzu kommt, daß der Generator nicht mit einer zu hohen Drehzahl betrieben wird, weil dadurch eine Spannung erzeugt werden könnte, die den Regler beschädigt.

Um die erforderliche Gesamtleistung zu erbringen, kann der ursprünglich vorgesehene Generator durch einen mit höherer Leistung ersetzt werden, was aber auch eine Verstärkung der Verdrahtung erfordert. Zudem ist ein solcher Ersatz kosten- und zeitaufwendig. Auch ist es bekannt, den ursprünglich vorgesehenen Ladestromkreis zu verdoppeln, so daß ein zweiter von dem Verbrennungsmotor aus angetriebener Generator mit einer Verdrahtung vorgesehen ist, die von der Verdrahtung des ursprünglichen Ladestromkreises isoliert ist. Dieses Doppelsystem wird vorwiegend bei Wohnmobilen eingesetzt, um Kühlschränke, Fernseher usw. betreiben zu können. Das Doppelsystem mit zwei Generatoren erfordert getrennte Spezialverdrahtungen, die die gegenseitige Abstimmung beider Systeme erschwert. Bei Ausfall eines Generators oder bei Fehlern in seinem Stromkreis wird das entsprechende System unwirksam. Handelt es sich bei dem ausgefallenen System um den Ladestromkreis für den Motor, dann ist das Fahrzeug nicht mehr betriebsfähig.

Die mit der Erfindung zu lösende Aufgabe wird in einem Ladesystem gesehen, das unter Vermeidung zumindest der meisten vorgenannten Nachteile relativ einfach, kompakt und kostengünstig sowie leicht - gegebenenfalls auch nachträglich - zu installieren ist. Nach einem ersten Aspekt sieht die Erfindung deshalb vor, daß die Verdrahtung einen ersten Verdrahtungsabschnitt und einen zweiten Verdrahtungsabschnitt aufweist, die miteinander über einen Steckverbinder mit einem ersten und einem zweiten Steckerteil verbindbar sind, und daß ein Zusatzladestromsystem vorgesehen ist, das einen von dem Verbrennungsmotor aus antreibbaren Zusatzgenerator mit einem Ausgang und eine mit dem Zusatzgenerator verbundene Zusatzverdrahtung mit einem dritten und einem vierten Steckerteil aufweist, wobei der dritte und der vierte Steckerteil in den Steckverbinder steckbar sind, wenn der erste und der zweite Steckerteil voneinander getrennt sind. Auf diese Weise wird das Zusatzsystem in das ursprünglich vorhandene System integriert. Die Gesamtkapazität des Systems läßt sich leicht erhöhen und bei Ausfall eines Teilsystems beispielsweise kann das andere die Funktion aufrechterhalten. In dem ursprünglich vorgesehenen Ladestromkreis brauchen nur geringfügige Eingriffe vorgenommen zu werden. Zur Vergrößerung der Kapazität braucht lediglich der Steckverbinder getrennt und mit den Steckerteilen der Zusatzverdrahtung verbunden zu werden, nachdem der Zusatzgenerator installiert wurde. Bei Ausfall eines Systems kann das andere System die Stromversorgung übernehmen.

Es wird ferner vorgeschlagen, daß die Zusatzverdrahtung derart ausgebildet ist, daß der Zusatzgenerator zu dem Generator parallel oder im wesentlichen parallel geschaltet ist, wenn der dritte und der vierte Steckerteil mit dem ersten und dem zweiten Steckerteil verbunden sind. Die Gesamtkapazität läßt sich damit annähernd verdoppeln und bei Ausfall eines Generators kann der andere seine Aufgabe übernehmen und der Betrieb wird nicht zu stark beeinträchtigt. Bei einer im wesentlichen parallelen Schaltung kann zwischen den positiven Leitungen oder den negativen Leitungen noch ein Elektroteil, wie eine Diode, vorgesehen sein.

Damit der Regler des ursprünglichen Systems nicht beschädigt wird, kann außerdem noch vorgesehen werden, daß das Zusatzladestromsystem einen Zusatzregler aufweist und daß der Regler und der Zusatzregler Überwachungseingänge und geregelte Ausgänge aufweisen, wobei die Zusatzverdrahtung eine Leitung aufweist, die die Überwachungseingänge verbindet. Durch das letzte Merkmal wird die Spannungsüberwachung koordiniert.

Schließlich kann die Zusatzverdrahtung zwei Leitungen aufweisen, die die geregelten Ausgänge der Regler miteinander verbinden, wobei die Zusatzverdrahtung eine gemeinsame mit dem Regler und dem Zusatzregler verbundene Leitung aufweisen kann. Die zur Batterie führenden Powerleitungen des ursprünglichen Systems können im Prinzip weiter Verwendung finden. Es wird jedoch nach der Erfindung bevorzugt, daß die Zusatzverdrahtung eine positive und eine negative Hochleistungsleitung aufweist, die an die Batterie angeschlossen sind und eine Stromverbindung von dem Regler und dem Zusatzregler zur Batterie schaffen. Damit ist eine Verstärkung der Verdrahtung des ursprünglichen Systems nicht erforderlich.

Ein weiterer Aspekt der Erfindung sieht vor, daß ein Zusatzgenerator mit einem Ausgang, der von dem Verbrennungsmotor aus angetrieben wird und mit diesem verbunden ist, und daß eine Zusatzverdrahtung vorgesehen ist, die sich zwischen dem Ausgang des Zusatzgenerators und der Batterie erstreckt und den Zusatzgenerator parallel oder im wesentlichen parallel zu dem Generator verbindet.

Auch bei diesem System wird eine Gesamtleistung erreicht, die gleich oder höher einer vorgewählten maximalen Belastungsspitze ist. Bei Ausfall eines Generators kann der andere den Fahrzeugbetrieb aufrechterhalten. Dieses integrierte System ist auch leicht nachträglich zu installieren, wenn die erste Verdrahtung einen ersten und einen zweiten Verdrahtungsabschnitt aufweist, die über einen Steckverbinder mit einem ersten und einem zweiten Steckerteil miteinander verbindbar sind, und daß die Zusatzverdrahtung eine Steckverbindung aufweist, die in den ersten und den zweiten Steckerteil steckbar ist und den Generator zu dem Zusatzgenerator parallel schaltet.

Zweckmäßig ist für diese Alternative noch vorgesehen, daß die Zusatzverdrahtung eine positive und eine negative Leitung aufweist, die den Ausgang des Generators und den Ausgang des Zusatzgenerators mit der Batterie verbindet, wobei die Steckverbindung derart ausgebildet ist, daß sie eine zur Batterie führende Leitung in der ersten Verdrahtung abschaltet, wenn die Steckverbindung mit dem ersten und mit dem zweiten Steckerteil verbunden ist.

Schließlich wird noch vorgeschlagen, daß mit dem Zusatzgenerator ein Zusatzregler verbunden ist, wobei der Regler und der Zusatzregler Überwachungseingänge aufweisen, die miteinander und mit der Batterie verbunden sind.

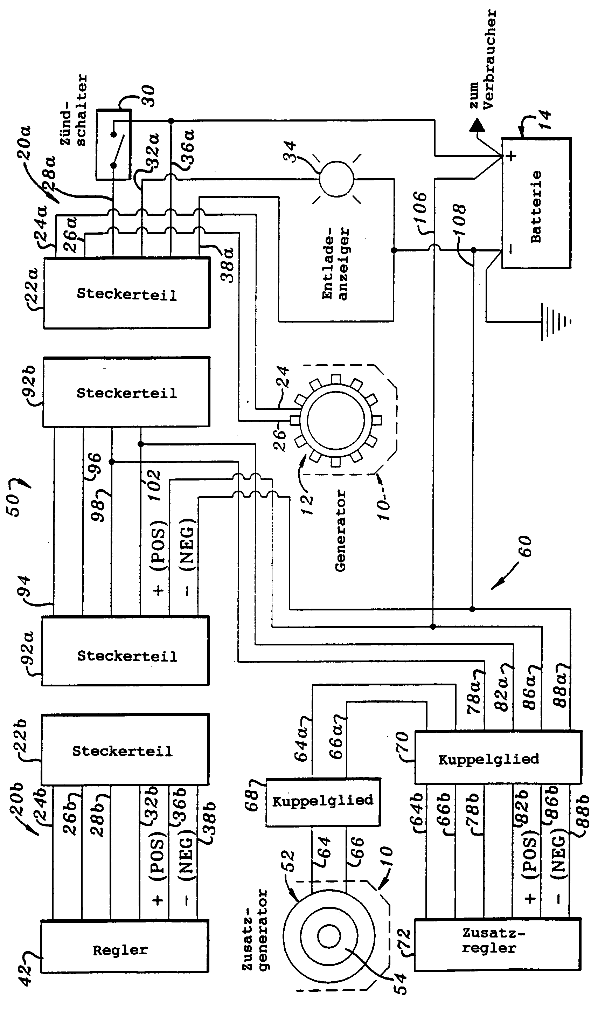

In der einzigen Figur ist ein nachfolgend beschriebenes Ausführungsbeispiel für ein Ladestromsystem nach der Erfindung schematisch dargestellt.

In Fahrzeuge eingebaute Verbrennungsmotore arbeiten in der Regel mit einem Ladestromkreis oder kurz Ladekreis zusammen, der das Laden der Batterie und die Stromerzeugung während des Betriebes besorgt. Man unterscheidet zwischen einem Gleichstrom-Ladekreis mit einem Gleichstromgenerator und einem Wechselstrom-Ladekreis mit einem Drehstromgenerator. Alle Ladekreise arbeiten im Prinzip in drei Stufen, und zwar: beim Start liefert die Batterie allen Strom, bei normalem Betrieb liefert der Generator allen Strom und lädt die Batterie und bei Spitzenbelastungen unterstützt die Batterie den Generator bei der Stromlieferung. Beide Ladekreise haben zusätzlich einen Regler, der normalerweise bei einem Gleichstrom-Ladekreis den Ladekreis öffnet und schließt, eine Überladung der Batterie verhütet und die Generatorleistung auf sichere Werte begrenzt, während er in einem Wechselstrom-Ladekreis die Generatorspannung auf einen festgelegten sicheren Wert begrenzt.

In der Schemazeichnung des bevorzugten Ausführungsbeispiels ist ein Verbrennungsmotor 10 für ein Arbeitsfahrzeug, das ein Ackerschlepper oder auch ein in der Grundstückspflege einsetzbarer Kleinschlepper sein kann, lediglich angedeutet. Dem Motor 10 ist ein herkömmlicher Drehstromgenerator 12 zugeordnet, der eine Batterie 14 über eine Verdrahtung mit Verdrahtungsabschnitten 20a und 20b versorgt. Von der Batterie führen weitere Stromkreise zu den Verbrauchern. Der Abschnitt 20a ist mit einem Steckerteil 22a mit 6 Kabelanschlüssen und entsprechend vielen Kontakten oder Kontaktstiften versehen, der bei einem Ladekreis mit einem einzigen Generator in einen Steckerteil 22b gesteckt werden kann, der ebenfalls 6 Kabelanschlüsse mit entsprechend vielen Kontakten oder Kontakthülsen hat. Die Steckerteile 22a und 22b bilden einen Steckverbinder. Der Verdrahtungsabschnitt 20a ist mit zwei Leitungen 24a und 26a, die mit Klemmen 24 und 26 am Generator 12 verbunden sind, einer Leitung 28a, die mit dem Ausgang eines Zündschalters 30 verbunden ist, und mit einer Entladeanzeige-Leitung 32a versehen, die mit einer Klemme eines Entladeanzeigers 34 verbunden ist. Der Eingang des Zündschalters 30 ist an die positive Klemme der Batterie 14 und die andere Klemme des Entladeanzeigers 34 ist an die negative Klemme der Batterie 14 angeschlossen. Zwei weitere Leitungen 36a und 38a des Verdrahtungsabschnittes 20a sind noch an die Batterie 14 angeschlossen, und zwar die Leitung 36a an die positive Klemme und die Leitung 38a an die negative Klemme.

Die sechs Leitungen des Verdrahtungsabschnittes 20b sind mit 24b, 26b, 28b, 32b, 36b und 38b bezeichnet. Diese Leitungen sind an die Eingangsklemmen eines Reglers 42 für den Generator 12 angeschlossen. Hierbei sind die Leitungen 24b und 26b Eingangsleitungen, die von dem Generator 12 kommen. Die Leitung 28b ist eine Spannungsüberwachungs-Leitung, die die Spannung an der Batterie 14 überwacht. Die Leitung 32b ist eine Entladeanzeige-Leitung, und die Leitungen 36b und 38b sind positive und negative Ausgangsleitungen, die von dem Regler 42 zu der Batterie 14 führen. Wenn für die Strom benötigenden Verbraucher, die nomalerweise an einem Verbrennungsmotor und den Zubehörteilen und Hilfseinrichtungen an einem Fahrzeug anzutreffen sind, ein einziger Generator nur erforderlich ist, dann wird der Steckerteil 22a des Verdrahtungsabschnittes 20a in den Steckerteil 22b des Verdrahtungsabschnittes 20b gesteckt, so daß die Leitungen 24a, 26a, 28a, 32a, 36a und 38a direkt mit den Leitungen 24b, 26b, 28b, 32b, 36b und 38b verbunden sind. Der Drehstromgenerator 12 erzeugt einen durch die Leitungen 36a, 36b und 38a, 38b fließenden Ladestrom bis zu einer maximalen Stärke, die bei typischen Arbeitsfahrzeugen in dem Bereich zwischen 10A bis 20A liegen kann.

In der Schemazeichnung ist ein weiterer Stromkreis oder Zusatzstromkreis für einen zusätzlichen Drehstromgenerator mit 50 bezeichnet. Dieser ist für Systeme bestimmt, die für längere Zeiträume hohe Generatorleistungen gegebenenfalls bei niedrigen Motordrehzahlen benötigen. Ein solcher Stromkreis wird eingesetzt, wenn eine Ladeleistung erforderlich ist, die über der Generatorleistung des Drehstromgenerators 12 liegt, was beispielsweise der Fall sein kann, wenn die stromführenden Zubehörteile und Hilfseinrichtungen jeweils bis zu 25A oder mehr benötigen. Wenn nun dieser Stromkreis 50 mit dem ursprünglichen Ladekreis kombiniert wird, so entsteht eine Gesamtladeleistung, die selbst bei leerlaufendem Motor bei Systemen ausreichend ist, die eine hohe Ladeleistung erfordern.

Der Zusatzstromkreis 50 ist mit einem zusätzlichen Drehstromgenerator oder Zusatzgenerator 52 ausgestattet, der ebenfalls an dem Verbrennungsmotor 10 angeordnet und bevorzugt mit einer Riemenscheibe 54 ausgerüstet ist, die von einer am Motor vorgesehenen und durch diesen antreibbaren allerdings in der Zeichnung nicht dargestellten Antriebsscheibe über einen entsprechenden Riemen antreibbar ist. Die Verdrahtung des Zusatzstromkreises 50 ist mit 60 bezeichnet. Man erkennt zwei Generatorleitungen 64a und 66a, die mit Klemmen 64 und 66 am Zusatzgenerator 52 über ein Kuppelglied 68 verbindbar sind. Die Generatorleitungen 64a und 66a führen zu einem weiteren Kuppelglied 70, das die Generatorleitungen 64a und 66a mit Eingangsleitungen 64b und 66b verbindet, die zu einem Zusatzregler 72 gehören. Dieser ist im Prinzip baugleich mit dem Regler 42. Zwischen dem weiteren Kuppelglied 70 und dem Zusatzregler 72 sind ferner noch eine Spannungs-Überwachungsleitung 78b, eine Entladeanzeige-Leitung 82b und eine positive und eine negative Klemmenleitung 86b und 88b vorgesehen.

Zu der Verdrahtung 50 des Zusatzstromkreises 50 gehören noch Leitungen 78a, 82a, 86a und 88a, die über das weitere Kuppelglied 70 mit der Spannungs-Überwachungsleitung 78b, der Entladeanzeige-Leitung 82b und mit der positiven und der negativen Klemmenleitung 86b und 88b am Zusatzregler 72 in Verbindung stehen. Die Leitungen 78a, 82a sind zusätzlich noch an zwei Steckerteile 92a und 92b angeschlossen, während die Leitungen 86a und 88a nur mit dem Steckerteil 92a verbunden sind. Wenn die Steckerteile 22a und 22b nicht ineinander gesteckt sind, ist der Steckerteil 92a in den Steckerteil 22b und der Steckerteil 92b ist in den Steckerteil 22a steckbar, wozu an den Steckerteilen 22a und 22b entsprechende Kontakte oder Kontaktstifte bzw. Kontakthülsen vorgesehen sind. Die Steckerteile 92a und 92b des Zusatzstromkreises 50 sind miteinander über Generator-Durchgangsleitungen 94 und 96, die die Leitungen 24a und 24b des Verdrahtungsabschnittes 20a mit den Leitungen 24b und 26b des Verdrahtungsabschnittes 20b miteinander verbinden, und über eine Spannungs-Überwachungsleitung 98, an die die Leitung 82a angeschlossen ist und die die Leitung 32a des Verdrahtungsabschnittes 20a mit der Leitung 32b des Verdrahtungsabschnittes 20b miteinander verbindet, und noch über eine Entladeanzeige-Leitung 102 verbunden, an die die Leitung 82a angeschlossen ist und die die Leitung 32a des Verdrahtungsabschnittes 20a mit der Leitung 32a des Verdrahtungsabschnittes 20a mit der Leitung 32b des Verdrahtungsabschnittes 20b verbindet, wenn der Zusatzstromkreis 50 eingeschaltet ist bzw. wenn die Steckerteile 92a und 92b des Zusatzstromkreises 50 in die Steckerteile 22b und 22a des ursprünglichen sich aus den Verdrahtungsabschnitten 20a und 20b zusammensetzenden Ladekreises gesteckt sind. Bei eingeschaltetem Zusatzstromkreis 50 wird damit von den Überwachungsleitungen 28b und 78b dieselbe Spannung überwacht. Entsprechendes gilt für die Entladeanzeige.

Da die positive und die negative Klemmenleitung 86b und 88b und die Leitungen 86a und 88a an der Ausgangsseite des Kuppelgliedes 70 mit dem Steckerteil 92a verbunden sind, sind, wenn der Steckerteil 92a in den Steckerteil 22b gesteckt ist, die Ausgangsseiten von beiden Reglern 42 und 72 miteinander verbunden und bewirken ein paralleles Arbeiten beider Generatorsysteme. Aus der Schemazeichnung ist ferner erkennbar, daß bei dem bevorzugten Ausführungsbeispiel zwischen den beiden Steckerteilen 92a und 92b keine Verbindungsleitungen vorgesehen sind, die den Kabelanschlüssen für die Leitungen 36a, 38a und 36b und 38b entsprechen würden. Statt dessen sind zwei hochbelastbare positive und negative Leitungen 106 und 108 an die Leitungen 86a und 88a angeschlossen, so daß zwischen den Ausgängen der Regler und der positiven und negativen Klemme der Batterie 14 eine Hochleistungsverbindung geschaffen ist, die die gesamte Kapazität der Drehstromgeneratoren 12 und 52 verarbeitet, wobei die Gesamtkapazität im wesentlichen der Summe der einzelnen Drehstromgeneratoren entspricht. Andererseits könnten aber auch die Leitungen 36a und 38a als hochbelastbare Leitungen ausgebildet sein und zwischen den Steckerteilen 92a und 92b entsprechende Verbindungsleitungen vorgesehen werden, wodurch die Leitungen 106 und 108 entfallen könnten. Eine Verbindung der Regler mit der Batterie über die Leitungen 106 und 108 wird jedoch bevorzugt, da sie einen zuverlässigeren Kreislauf schaffen und weil darüberhinaus die Steckerteile den kumulativen Ausgangsstrom aufnehmen müßten.

Mit der vorliegenden Erfindung ist es möglich, den Ladestromkreis so zu gestalten, daß er in herkömmlicher Weise arbeitet. In einem solchen Fall ist der Zusatzstromkreis 50 nicht erforderlich und die beiden Steckerteile 22a und 22b werden unmittelbar ineinander gesteckt. Die Stromversorgung erfolgt ausschließlich über den Generator 12. Sollten aber aus irgendeinem Grund hohe Generatorleistungen erforderlich werden, so. wird der Zusatzgenerator 52 in herkömmlicher Weise an den Verbrennungsmotor 10 angeschlossen und der Zusatzregler 72 mit dem Fahrzeug verbunden. Die Verdrahtung 60 wird installiert, indem die Kupplungsglieder 68 und 70 eingesteckt werden. Die Steckerteile 22a und 22b werden voneinander getrennt, und der Steckerteil 92a wird in den Steckerteil 22b gesteckt und der Steckerteil 92b wird in den Steckerteil 22a gesteckt. Schließlich sind noch die Leitungen 106 und 108 mit der positiven und der negativen Klemme der Batterie 14 zu verbinden und das Zusatzsystem ist fertig installiert.

Das kombinierte Ladestromsystem erlaubt die Weiterverwendung des ursprünglichen Ladestromkreises mit seinen Verdrahtungsabschnitten 20a und 20b. Durch die Zuschaltung des Zusatzstromkreises läßt sich damit in einfacher Weise die Gesamtkapazität erhöhen, falls dies erforderlich wird. Der Zusatzstromkreis ist infolge der vorgesehenen Steckerteile und Kuppelglieder leicht zu installieren und wieder auszubauen für den Fall einer Fehlersuche. Bei einem Ausfall eines Kreises kann der andere Kreis die Funktionsfähigkeit des Fahrzeuges aufrechterhalten.

## Patentansprüche

1. Ladestromsystem für ein Fahrzeug, insbesondere Nutzfahrzeug, mit einer Batterie (14), einem Verbrennungsmotor (10), einem Generator (12), einem Regler (42) für den Generator (12) und mit einer Verdrahtung, die den Generator (12) mit der Batterie (14) und mit dem Regler (42) verbindet, dadurch gekennzeichnet, daß die Verdrahtung einen ersten Verdrahtungsabschnitt (20a) und einen zweiten Verdrahtungsabschnitt (20b) aufweist, die miteinander über einen Steckverbinder mit einem ersten und einem zweiten Steckerteil (22a, 22b) verbindbar sind, und daß ein Zusatzladestromsystem vorgesehen ist, das einem von dem Verbrennungsmotor (10) aus antreibbaren Zusatzgenerator (52) mit einem Ausgang und eine mit dem Zusatzgenerator (52) verbundene Zusatzverdrahtung (60) mit einem dritten und einem vierten Steckerteil (92a und 92b) aufweist, wobei der dritte und der vierte Steckerteil (92a und 92) in den Steckverbinder steckbar sind, wenn der erste und der zweite Steckerteil (22a, 22b) voneinander getrennt sind.

2. Ladestromsystem nach Anspruch 1, dadurch gekennzeichnet, daß die Zusatzverdrahtung (60) derart ausgebildet ist, daß der Zusatzgenerator (52) zu dem Generator (12) parallel oder im wesentlichen parallel geschaltet ist, wenn der dritte und der vierte Steckerteil (92a und 92b) mit dem ersten und dem zweiten Steckerteil (22a und 22b) verbunden sind.

3. Ladestromsystem nach Anspruch 1, dadurch gekennzeichnet, daß das Zusatzladestromsystem einen Zusatzregler (72) aufweist und daß der Regler (42) und der Zusatzregler (42) Überwachungseingänge (28b, 78b) und geregelte Ausgänge (36b, 38b und 86b, 88b) aufweisen, wobei die Zusatzverdrahtung (60) eine Leitung (98, 78a) aufweist, die die Überwachungseingänge (28b, b) verbindet.

4. Ladestromsystem nach Anspruch 3, dadurch gekennzeichnet, daß die Zusatzverdrahtung (60) zwei Leitungen (86a, 88a) aufweist, die die geregelten Ausgänge (36b, 39b und 86b, 88b) der Regler (42, 72) miteinander verbinden.

5. Ladestromkreis nach Anspruch 4, dadurch gekennzeichnet, daß die Zusatzverdrahtung (60) eine gemeinsame mit dem Regler (42) und dem Zusatzregler (72) verbundene Leitung aufweisen.

6. Ladestromkreis nach Anspruch 4, dadurch gekennzeichnet, daß die Zusatzverdrahtung (60) eine positive und eine negative Hochleistungsleitung (106 und 108) aufweist, die an die Batterie (14) angeschlossen sind und eine Stromverbindung von dem Regler (42) und dem Zusatzregler (72) zur Batterie (14) schaffen.

7. Ladestromkreis für ein Fahrzeug, insbesondere Nutzfahrzeug, mit einer Batterie (14), einem Verbrennungsmotor (10), einem Generator (12), einem Regler (42) und einer ersten Verdrahtung, die den Generator (12) mit der Batterie (14) und mit dem Regler (42) verbindet, dadurch gekennzeichnet, daß ein Zusatzgenerator (52) mit einem Ausgang, der von dem Verbrennungsmotor (10) aus angetrieben wird und mit diesem verbunden ist, und eine Zusatzverdrahtung (60) vorgesehen ist, die sich zwischen dem Ausgang des Zusatzgenerators (52) und der Batterie (14) erstreckt und den Zusatzgenerator (52) parallel oder im wesentlichen parallel zu dem Generator (12) verbindet.

8. Ladestromkreis nach Anspruch 7, dadurch gekennzeichnet, daß die erste Verdrahtung einen ersten und einen zweiten Verdrahtungsabschnitt (20a und 20b) aufweist, die über einen Steckverbinder mit einem ersten und einem zweiten Steckerteil (22a und 22b) miteinander verbindbar sind, und daß die Zusatzverdrahtung (60) eine Steckverbindung aufweist, die in den ersten und den zweiten Steckerteil (22a, 22b) steckbar ist und den Generator (12) zu dem Zusatzgenerator (52) parallel schaltet.

9. Ladestromkreis nach Anspruch 8, dadurch gekennzeichnet, daß die Zusatzverdrahtung (60) eine positive und eine negative Leitung (106, 108) aufweist, die den Ausgang des Generators (12) und den Ausgang des Zusatzgenerators (52) mit der Batterie (14) verbindet, wobei die Steckverbindung derart ausgebildet ist, daß sie eine zur Batterie (14) führende Leitung (36a, 38a) in der ersten Verdrahtung abschaltet, wenn die Steckverbindung mit dem ersten und mit dem zweiten Steckerteil (22a, 22b) verbunden ist.

10. Ladestromkreis nach Anspruch 8, dadurch gekennzeichnet, daß mit dem Zusatzgenerator (52) ein Zusatzregler (72) verbunden ist, wobei der Regler (42) und der Zusatzregler (72) Überwachungseingänge (26b, 82b) aufweisen, die miteinander und mit der Batterie (14) verbunden sind.
